# EUROPEAN PATENT APPLICATION

(11) **EP 3 521 153 A1**
(43) Date of publication of application: **07.08.2019**
(21) Application number: 18185652.7
(22) Date of filing: 26.07.2018
(51) Int. Cl.: B62M 6/90, B62M 6/55, B62K 19/34, B62K 19/40, B62K 19/06, B23P 15/00, B21D 26/033, B21D 35/00, B21D 53/86

(54) **INTEGRAL LOWER TUBE AND MOTOR HOLDER OF ELECTRIC BICYCLE AND HYDRAULIC FORMING METHOD THEREOF**

(30) Priority: 05.02.2018 CN 201810111595
(71) Applicant: Tianchen Bicycle-parts (Shenzhen) co., ltd., Longhua district, Shenzhen Guangdong (CN); A-Forge Enterprise co., ltd., Taichung city (TW)
(72) Inventor: CHANG, TE - CHEN, TAICHUNG CITY (TW)
(74) Representative: de Arpe Fernandez, Manuel

(57) **Abstract**

An integral lower tube (1) and a motor holder (2) of an electric bicycle and a hydraulic forming method thereof is provided to integrally hydraulic molding the lower tube (1) and the motor holder (2). The motor holder (2) is connected to a lower portion (1a) of the lower tube (1). The lower tube (1) includes a hollow receiving room (10) formed on its inner portion (1b) along its axis direction for receiving a battery (4) therein, a window (13) formed on its inner wall surface (1c) for corresponding to the battery (4) and covered by a corresponding cover (11). The structure is provided the integral lower tube and the motor holder so that a welding process is omitted and manufacturing cost is reduced. It not only can improve productivity, quality, safety performance and lifespan of frames no matter accessories and frame factories, but also can simple and protect walking distribution between the battery and the motor by installing the battery in the receiving room.

## Description

### BACKGROUND

### 1. Technical Field

The present disclosure generally relates to electric bicycles field, and especially relates to an integral lower tube and a motor holder of an electric bicycle and a hydraulic forming method thereof.

### 2. Description of Related Art

A lower tube and a motor holder are two important components of an electric bicycle. During assembling a conventional electric bicycle, the lower tube and the motor holder are first respectively supplied by two different professional suppliers, and then the lower tube and the motor holder are welded together by a frame factory. In this way, the welding process is complicated and too many welding and correction tools are required so that both manpower and material resources need higher cost. At the same time, the appearance of the welded product is difficult to be smooth, and the quality is unstable and the production capacity is low due to the welding level of each technician is inconsistent. In addition, The conventional electric bicycle has no a suitable installation position in the lower tube for receiving the battery therein, which makes the battery installation inconvenient and wiring layout between the battery and the motor holder is difficult. In conclusion, there is a need to improve the structure of the lower tube and the motor holder of the electric bicycle.

### SUMMARY

The technical problems to be solved: in view of the shortcomings of the related art, the present disclosure relates to an integral lower tube and a motor holder of an electric bicycle and a hydraulic forming method thereof which can not only improve productivity, quality, safety performance and lifespan of frames no matter accessory and frame factories, but also simple and protect wiring distribution between the battery and the motor by installing the battery in a receiving room of the lower tube.

The technical solution adopted for solving technical problems of the present disclosure is:
an integral lower tube and a motor holder of an electric bicycle includes a lower tube and a motor holder integrated with the lower tube by a hydraulic molding way. The motor holder is connected to a lower portion of the lower tube. The lower tube includes a hollow receiving room formed on its inner portion along its axis direction thereof for receiving a battery therein, and a window formed on its inner wall surface for corresponding to the battery and covered by a corresponding cover.

Wherein the cover is connected to the battery by a connecting member, and the connecting member is a U-shaped buckle; the U-shaped buckle including a base and a pair of clamps longitudinally extending outward from two opposite ends of the base, the battery including a pair of corresponding recesses engaged with the pair of clamps, and the cover and the base respectively including a screwing hole corresponding to each other for receiving a screw therein.

Wherein the pair of recesses is axially formed on a surface of the battery, the recess has a T-shape radial sectional and includes a longitudinal recess for receiving the clamp therein and a lateral recess for receiving an end portion of the clamp after the end portion laterally blending outward.

Wherein at least one end of the recess is an opening end for the U-shaped buckle sliding therein until its base plate corresponding to the screwing hole of the cover.

Wherein a wall thickness range of both the lower tube and the motor holder is 3.5mm-4.5mm, a radius of a first fillet at two opposite ends of the lower tube is 34mm-60mm, and a radius of a second fillet of the motor holder is 130mm-180mm.

A hydraulic forming method of an integral lower tube and a motor holder of an electric bicycle according to an exemplary embodiment of the present disclosure includes the following steps:
Providing a circular tube according to a required dimension;
Soaking the circular tube in lubricant to attach the lubricant on a surface of the circular tube;
Stretching the circular tube by a pulling machine and a corresponding shaft core to obtain the circular tube with a uniform wall thickness;
Annealing the circular tube by a heat treatment furnace to reduce its hardness;
Processing the outer diameter circumference of the circular tube at different positions by a tube shrink machine to meet requirements of the integral lower tube and the motor holder;
Annealing the circular tube again by the heat treatment furnace to further reduce its hardness and soaking it again in the lubricant;
Pre-shaping the circular tube by a hydraulic mould to obtain a primary product with an elementary contour of the lower tube and the motor holder;
Stamping the primary product by a mould to enhance the matching degree between the primary product and a forming mould;
Hydraulic processing the primary product by the forming mould to obtain a molded product after the primary product is adjusted;
Tailoring two opposite ends of the molded product to remove its leftover material;
Processing the molded product by a milling machine to obtain the motor holder and a hole matched with a motor;
Grinding, polishing and deburring the molded product after being processed by the milling machine to obtain a finished product.

Wherein the lubricant used for soaking is mixed according to the ratio of water to lubricating oil at 1:3, the temperature is heated to 80±5 degrees centigrade, and the soaking time of the circular tube is 3 minutes.

Wherein in the annealing step, the working temperature of the heat treatment furnace is 500 degrees centigrade and the working time is 4 hours.

The present disclosure provides the advantages as below.

The structure of the present disclosure can provide an improved lower tube integrated with a motor holder for simplifying the welding assembling step of a frame and improving the yield of the product. At the same time, the battery is installed in the lower tube so that the wiring connection between the battery and the motor is more convenient.

### BRIEF DESCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG. 1 is a schematic view of the integral lower tube and a motor holder of an electric bicycle in accordance with an exemplary embodiment, shown in a use state.
FIG. 2 is a radial assembly schematic view of the lower tube and a battery of FIG. 1.
FIG. 3 is a radial schematic view of the lower tube of FIG. 1.
FIG. 4 is a radial schematic view of the battery of FIG. 1.
FIG. 5 is an assembly schematic view of a U-shaped buckle, a cover and a screw of FIG. 1.

The element labels according to the exemplary embodiment of the present disclosure shown as below:
1, lower tube; 1a, lower portion; 1b, inner portion; 1c, inner wall surface; 10, receiving room; 11, cover; 12, U-shaped buckle; 120, base; 121, clamp; 122, end portion; 13, window; 2, motor holder; 3, motor; 4, battery; 40, recess; 41, longitudinal recess; 42, lateral recess; 100, screwing hole; 101, screw.

### DETAILED DESCRIPTION

The disclosure is illustrated by way of example and not by way of limitation in the figures of the accompanying drawings, in which like reference numerals indicate similar elements.

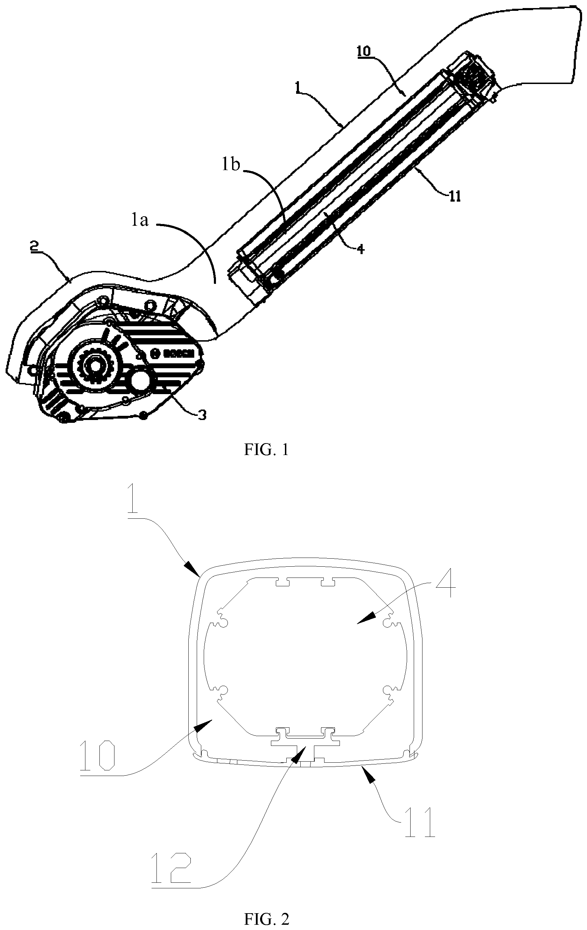

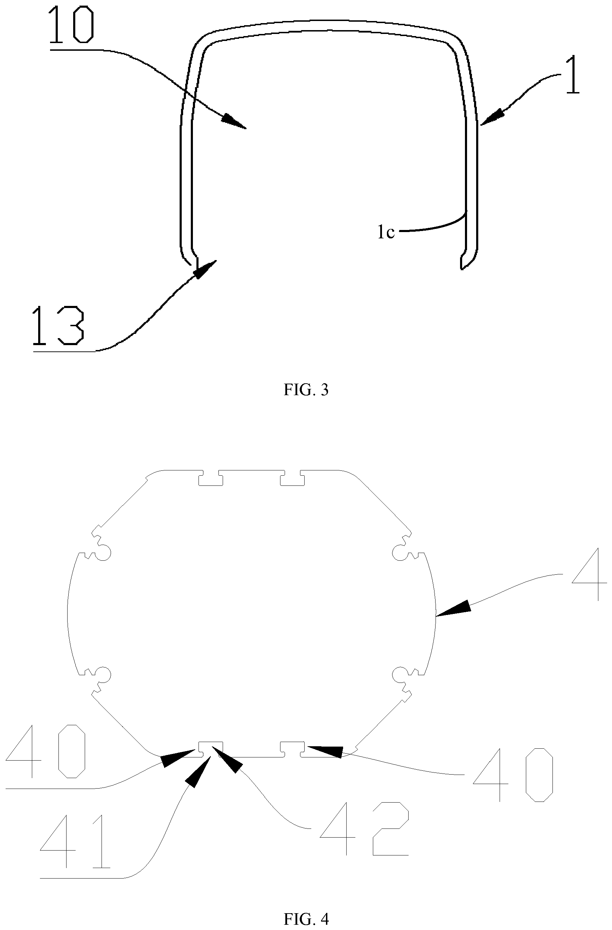

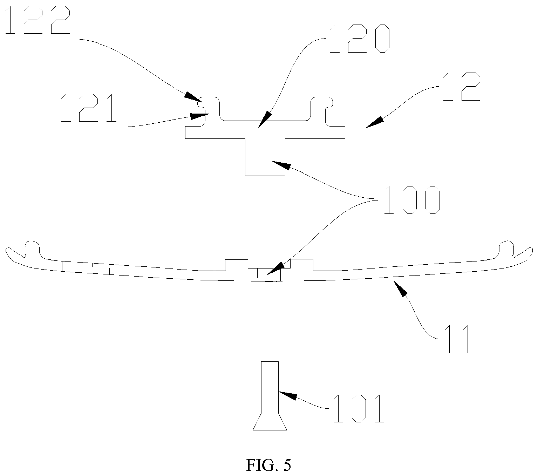

Referring to FIGS. 1-5, an integral lower tube and a motor holder of an electric bicycle is provided and includes a lower tube 1 and a motor holder 2 integrated with the lower tube 1 by a hydraulic molding way. The motor holder 2 is connected to a lower portion 1a of the lower tube 1. The lower tube 1 includes a hollow receiving room 10 formed on its inner portion 1b along its axis direction thereof for receiving a battery 4 therein, and a window 13 formed on its inner wall surface 1c for corresponding to the battery 4 and covered by a corresponding cover 11. The lower tube 1 is integrated with the motor holder 2 for simplifying the welding assembling step of the frame and improving the yield of the product. At the same time, the battery 4 is received in the receiving room 10 of the lower tube 1 so that the wiring connection between the battery 4 and the motor 2 is more convenient.

In some exemplary embodiments of the present disclosure, the cover 11 is connected to the battery 4 by a connecting member, and the connecting member is a U-shaped buckle 12. The U-shaped buckle 12 includes a base 120 and a pair of clamps 121 longitudinally extending outward from two opposite ends of the base 120. The battery 4 includes a pair of corresponding recesses 40 engaged with the pair of clamps 121, and the cover 11 and the base 120 respectively includes a screwing hole 100 corresponding to each other for receiving a screw 101 therein. The battery 4 can generally be bolted or clamped into the receiving room 10, the U-shaped buckle 12 is connected to the battery 4 by the clamps 121, and the cover 11 is fixed with the U-shaped buckle 12 by the screws 101 to complete assembly of the cover 11 and the battery 4. In this way, it is convenient for disassembly and maintenance of the battery 4 by opening and closing the cover 11.

In some exemplary embodiments of the present disclosure, the pair of recesses 40 is axially formed on a surface of the battery 4. The recess 40 has a T-shape radial sectional and includes a longitudinal recess 41 for receiving the clamp 121 therein and a lateral recess 42 for receiving an end portion 122 of the clamp 121 after the end portion 122 laterally blending outward. At least one end of the recess 40 is an opening end for the U-shaped buckle 12 sliding therein until its base plate 120 corresponding to the screwing hole 100 of the cover 11. When assembling the U-shaped buckle 12, the pair of clamps 121 of the U-shaped buckle 12 is aligned with the opening end of the pair of axial recesses 40 and then slides along the recess 40 until its base 120 corresponds to the screwing hole 100 of the cover 11. In order to facilitate positioning the U-shaped buckle 12, a corresponding limiting structure can be formed on the recess 40 or a corresponding hole can be formed on the recess 40 to correspond to the screwing hole 100. The screw 101 passes through the cover 11 and the base 120 and is finally fixed with the battery 4.

Two opposite ends of the lower tube 1 and the motor holder 2 includes parts needed processing fillet. In the exemplary embodiment of the present disclosure, due to involving the hydraulic integrally molding process and in order to ensure the product stability and yield, a wall thickness range of both the lower tube 1 and the motor holder 2 is 3.5mm-4.5mm, a radius of a first fillet at two opposite ends of the lower tube 1 is 34mm-60mm, and a radius of a second fillet of the motor holder 2 is 130mm-180mm.

A hydraulic forming method of an integral lower tube and a motor holder of an electric bicycle according to an exemplary embodiment of the present disclosure includes the following steps:

Blanking a circular tube according to a required dimension from raw materials;

Mixing lubricant according to the ratio of water to lubricating oil at 1:3, heating the temperature at 80±5 degrees centigrade, and soaking the circular tube in the lubricant for 3 minutes to attach the lubricant to a surface of the circular tube to prevent the circular tube from being broken during in a stretching process;

After soaking the circular tube in the lubricant, stretching the circular tube by a pulling machine and a corresponding shaft core inserting into the circular tube to obtain the circular tube with a uniform wall thickness;

T4 annealing the circular tube by a heat treatment furnace to reduce its hardness for conveniently bending or slanting the circular tube in a next process without breaking or surface tension, with the working temperature of the heat treatment furnace being 500 degrees centigrade and the working time being 4 hours;

After the annealing step, tilting the circular tube to change the dimension of the outer diameter circumference of the circular tube at different positions by a tube shrink machine to meet requirements of the integral lower tube and the motor holder;

After the previous process, the properties of the material can be changed. The circular tube should be annealed again by the heat treatment furnace to further reduce its hardness and prevent from breaking or surface tension, with the working temperature of the heat treatment furnace being 500 degrees centigrade and the working time being 4 hours. Furthermore, the circular tube also should be soaked again in the lubricant, with the lubricant being again mixed according to the ratio of water to lubricating oil at 1:3, heating the temperature at 80±5 degrees centigrade, and soaking the circular tube in the lubricant for 3 minutes to attach the lubricant on a surface of the circular tube to prevent the circular tube from being broken during in a stretching process;

Pre-shaping the circular tube by a hydraulic mould to obtain a primary product with an elementary contour of the lower tube 1 and the motor holder 2;

Stamping the primary product by a mould to enhance the matching degree between the primary product and a forming mould; this step is mainly configured for chamfering angle treatment of two ends of the lower tube 1 and the motor holder 2;

Hydraulic processing the primary product by the forming mould to obtain a molded product after the primary product is adjusted;

Tailoring two opposite ends of the molded product to remove its leftover material;

Processing the molded product by a milling machine to obtain the motor holder 2 and a hole matched with the motor, and the window 13. In order to match the installation of the motor 3, the motor holder 2 is an approximate arc cover structure by a plurality of chamfering angle processes and includes an arc upper plate and a pair of side plates formed on two ends of the upper plate, but not a tubular structure, thereby it needs to be cut by a milling machine;

Grinding, polishing and deburring the molded product after being processed by the milling machine to obtain a finished product.

The aforesaid processing method can improve the structure of aluminum alloy so that it has high hardness, high toughness, pressure resistance, tension resistance and light quality. Thus, it is convenient for processing, manufacturing and environmental protection. In this way, a frame of the electric bicycle is formed therefrom so that the physical strength of a rider is not too much to be burdened, thereby the rider can achieve the effect of exercising at his leisure.

Although the features and elements of the present disclosure are described as embodiments in particular combinations, each feature or element can be used alone or in other various combinations within the principles of the present disclosure to the full extent indicated by the broad general meaning of the terms in which the appended claims are expressed.

## Claims

1. An integral lower tube and a motor holder of an electric bicycle comprising: a lower tube (1) and a motor holder (2) integrated with the lower tube (1) by a hydraulic molding way, the motor holder (2) connected to a lower portion (1a) of the lower tube (1); the lower tube (1) comprising a hollow receiving room (10) formed on its inner portion (1b) along its axis direction thereof for receiving a battery (4) therein, a window (13) formed on its inner wall surface (1c) for corresponding to the battery (4) and covered by a corresponding cover (11).

2. The integral lower tube and a motor holder of an electric bicycle as claimed in claim 1, wherein the cover (11) is connected to the battery (4) by a connecting member, and the connecting member is a U-shaped buckle (12); the U-shaped buckle (12) comprising a base (120) and a pair of clamps (121) longitudinally extending outward from two opposite ends of the base (120), the battery (4) comprising a pair of corresponding recesses (40) engaged with the pair of clamps (121), and the cover (11) and the base (120) respectively comprising a screwing hole (100) corresponding to each other for receiving a screw (101) therein.

3. The integral lower tube and a motor holder of an electric bicycle as claimed in claim 2, wherein the pair of recesses (40) is axially formed on a surface of the battery (4), the recess (40) has a T-shape radial sectional and comprises a longitudinal recess (41) for receiving the clamp (121) therein and a lateral recess (42) for receiving an end portion (122) of the clamp (121) after the end portion (122) laterally blending outward.

4. The integral lower tube and a motor holder of an electric bicycle as claimed in claim 3, wherein at least one end of the recess (40) is an opening end for the U-shaped buckle (12) sliding therein until its base plate (120) corresponding to the screwing hole (100) of the cover (11).

5. The integral lower tube and a motor holder of an electric bicycle as claimed in claim 1, wherein a wall thickness range of both the lower tube (1) and the motor holder (2) is 3.5mm-4.5mm, a radius of a first fillet at two opposite ends of the lower tube (1) is 34mm-60mm, and a radius of a second fillet of the motor holder (2) is 130mm-180mm.

6. A hydraulic forming method of an integral lower tube and a motor holder of an electric bicycle comprising the following steps:
Providing a circular tube according to a required dimension;
Soaking the circular tube in lubricant to attach the lubricant on a surface of the circular tube;
Stretching the circular tube by a pulling machine and a corresponding shaft core to obtain the circular tube with a uniform wall thickness;
Annealing the circular tube by a heat treatment furnace to reduce its hardness;
Processing the outer diameter circumference of the circular tube at different positions by a tube shrink machine to meet requirements of the integral lower tube (1) and the motor holder (2);
Annealing the circular tube again by the heat treatment furnace to further reduce its hardness and soaking it again in the lubricant;
Pre-shaping the circular tube by a hydraulic mould to obtain a primary product with an elementary contour of the lower tube (1) and the motor holder (2);
Stamping the primary product by a mould to enhance the matching degree between the primary product and a forming mould;
Hydraulic processing the primary product by the forming mould to obtain a molded product after the primary product is adjusted;
Tailoring two opposite ends of the molded product to remove its leftover material;
Processing the molded product by a milling machine to obtain the motor holder (2) and a hole matched with a motor (3);
Grinding, polishing and deburring the product after being processed by the milling machine to obtain a finished product.

7. The hydraulic forming method as claimed in claim 6, wherein the lubricant used for soaking is mixed according to the ratio of water to lubricating oil at 1:3, the temperature is heated to 80±5 degrees centigrade, and the soaking time of the circular tube is 3 minutes.

8. The hydraulic forming method as claimed in claim 1, wherein in the annealing step, the working temperature of the heat treatment furnace is 500 degrees centigrade and the working time is 4 hours.
